# EUROPEAN PATENT APPLICATION

(11) **EP 4 757 152 A1**
(43) Date of publication of application: **10.06.2026**
(21) Application number: 25220387.2
(22) Date of filing: 03.12.2025
(51) Int. Cl.: H02M 1/00, H02M 3/158, H02M 1/14, H02M 3/156, H02M 3/00

(54) **INTERLINKED FLUX CORRECTED BOOSTED COUPLED INDUCTORS**

(30) Priority: 03.12.2024 US 202463727577 P; 02.12.2025 US 202519406521
(71) Applicant: Analog Devices, Inc., Wilmington, MA 01887 (US)
(72) Inventor: IKRIANNIKOV, Alexandr, 01887 Wilmington (US)
(74) Representative: Wallin, Nicholas James

(57) **Abstract**

An inductive circuit includes a coupled inductor including a magnetic core including a first core rail, a second core rail, and multiple identical core legs between the first core rail and the second core rail, wherein the core legs include an identical gap; multiple identical inductive phase stages, wherein each inductive phase stage includes a core leg and an identical phase winding around the core leg, wherein each phase winding includes a first terminal connected to the input node and a second terminal connected to the output node; and an inductive linking stage identical to the multiple inductive phase stages, wherein a first terminal of a phase winding of the inductive linking stage is connected to the input node and a second terminal of the phase winding of the linking stage is connected to the linking inductance node.

## Description

### CLAIM OF PRIORITY

This patent application claims priority to U.S. Provisional Application Serial No. 63/727,577, filed December 3, 2024, which is incorporated by reference herein in its entirety.

### BACKGROUND

Electronic systems can include devices that require a regulated power source. Power circuits can be used to provide a circuit supply rail having a regulated voltage. Some power circuits include a switching converter circuit that uses switching to energize and de-energize a magnetic circuit element (e.g., an inductor) to provide a regulated voltage at the output. There can be different requirements on the regulated power source for different implementations. For example, some systems may have a higher need for a faster transient response and some systems may have a higher need for lower supply ripple to promote efficiency.

### SUMMARY OF THE DISCLOSURE

This document relates generally to switching regulator circuits. An example of a multi-phase switching converter circuit includes a coupled inductor, multiple switching phase circuits, and a controller circuit. The coupled inductor includes a magnetic core including a first core rail, a second core rail, and multiple identical core legs between the first core rail and the second core rail, wherein the core legs include an identical gap; multiple identical inductive phase stages, wherein each inductive phase stage includes a core leg and an identical phase winding around the core leg, wherein each phase winding includes a first terminal and a second terminal, and the second terminals are connected to an output node; and an inductive linking stage identical to the multiple inductive phase stages and including a first terminal and a second terminal, wherein the second terminal is connected to a linking inductance node. The switching phase circuits are each connected to an input node and connected to a respective first terminal of a phase winding of the inductive phase stages and the inductive linking stage of the first coupled inductor, and the controller circuit is configured to apply phase switching control signals to the switching phase circuits to produce a regulated output at the output node.

This section is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a circuit diagram of portions of an example of a switching converter circuit.
FIG. 2 is a sideview of an example of a boosted coupled inductor.
FIG. 3 is a cross section view of the example boosted coupled inductor of FIG. 2.
FIG. 4 is a circuit diagram of portions of another example of a switching converter circuit.
FIG. 5 is a sideview of an example of boosted coupled inductors that can be used in the switching converter circuit of FIG. 4.
FIG. 6 is a cross section view of the example boosted coupled inductors of FIG. 5.
FIG. 7 is a circuit diagram of portions of another example of a switching converter circuit.
FIG. 8 is a circuit diagram of portions of another example of a switching converter circuit.
FIG. 9 is a sideview of an example of a linked coupled inductor that can be used in the switching converter circuit of FIG. 8.
FIG. 10 is a graph of inductor current ripple curves for phases of non-linked coupled inductors and linked and coupled inductors.
FIG. 11 is another example of a linked coupled inductor.
FIG. 12 is a circuit diagram of another example of a multi-phase switching converter circuit.
FIG. 13 is a circuit diagram of another example of a multi-phase switching converter circuit.

### DETAILED DESCRIPTION

Power circuits may need to provide a fixed or stable output voltage or current as an electrical circuit supply for an electronic system. Some power circuits are switching converter circuits that convert the input voltage to a regulated output voltage. The regulation is typically achieved by recurrently charging a magnetic circuit element, such as an inductor, from an energy source and then discharging the energy of the magnetic circuit element to drive a load. The charging and discharging can be accomplished using electronic switches that include transistors.

Coupled inductors are two or more inductors that are magnetically coupled, such as by a common magnetic core for example. The magnetic coupling includes mutual inductance associated with magnetic flux from current flowing in the inductors. The improved magnetic coupling of coupled inductors leads to better current ripple cancellation and higher efficiency over separate inductors.

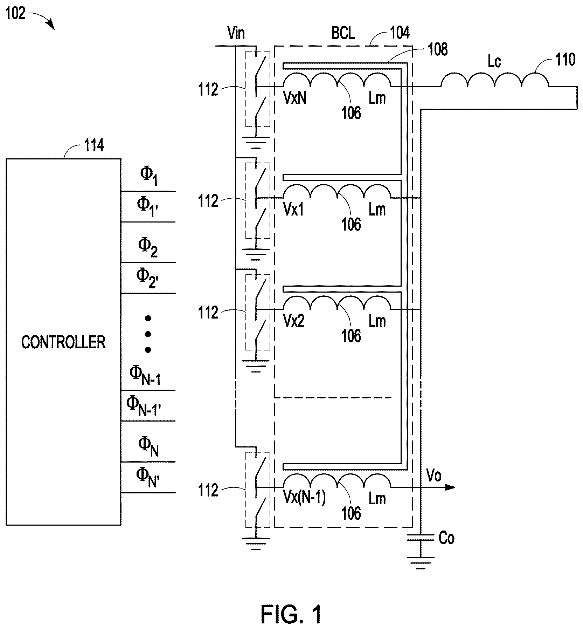

FIG. 1 is a circuit diagram of portions of an example of a multi-phase switching converter circuit 102. The switching converter circuit 102 receives an input voltage (Vin) at the input node and produces a regulated output voltage (Vo) at the output node. The output can be filtered using filter capacitor Co. The switching converter circuit 102 includes a boosted coupled inductor or BCL 104. The BCL 104 includes N phase windings 106 wound on a shared magnetic core 108, where *N* is an integer greater than one. The switching converter circuit 102 also includes a tuning inductor 110 (Lc) that is external to the BCL 104 and connected to one of the phase windings 106 of the BCL 104.

The switching converter circuit 102 includes phase switching circuits 112. The phase switching circuits 112 are connected to one of the terminals (e.g., a first terminal) of the phase windings 106. The other terminals (e.g., a second terminal) of the phase windings 106 are connected to the output node except for the phase winding connected to the tuning inductor 110. The phase switching circuits 112 each include an upper switch to connect the phase winding to the input node (Vin) and a lower switch to connect the phase winding to circuit ground.

A controller circuit 114 generates non-overlapping phase switching control signals Φ₁, Φ₁', Φ₂, Φ₂', ... Φ_{N}, Φ_{N}', for the phase switching circuits 112. The controller circuit 114 includes logic circuitry such as a processor to perform the functions described for the controller circuit 114. Control signal outputs Φ₁, Φ₂, ... Φ_{N}, can be connected to the upper switches of the phase switching circuits, and control signals Φ₁', Φ₂', ... Φ_{N}', can be connected to the lower switches of the phase switching circuits. Activating the phase switching circuits 112 produces a regulated output at the output node. FIG. 1 shows the tuning inductor 110 connected between a phase winding 106 and the output node Vo. In variations, the tuning inductor 110 can be connected between node VxN and the phase switching circuit 112 without any change in functionality.

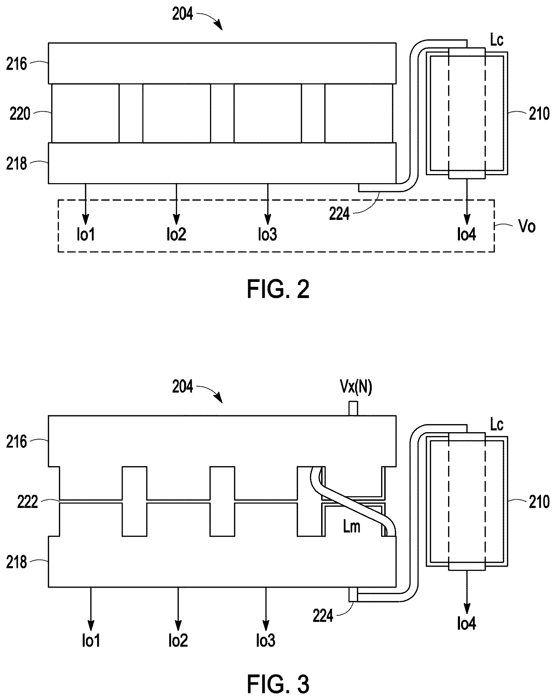

FIG. 2 is a sideview of an example of a BCL 204 and a tuning inductor 210 that can be used in a four-phase (*N*=4) switching converter circuit (e.g., the switching converter circuit of FIG. 1). The BCL 204 includes a magnetic core including a first core rail 216, a second core rail 218, and four core legs 220. The magnetic core can include for example a magnetic material such as one or both of a ferrite magnetic material and a powdered iron magnetic material. The core legs 220 are shown with a phase winding around the core legs 220. The first terminals of the four phase windings are located near the first core rail 216 and are connected to the phase switching circuits 112 of FIG. 1. The second terminals of the phase windings are located near the second core rail 218.

FIG. 3 is a cross section view of the example four-phase BCL 204 of FIG. 2. FIG. 3 shows that the core legs 220 have a gap 222 in the core legs. The four core legs 220 are identical and have the same height, width, and gap size. The phase windings and the core legs form four phase stages. Three of the four phases are inductive phase stages and the second terminals of the phase winding of the inductive phase stages are connected to the output node. The inductive phase stages produce output currents (*Io1, Io2, Io3*) that are provided to the output node. The fourth stage is an inductive linking stage identical to the inductive phase stages and includes a phase winding. The inductive linking stage is not connected to the output node and an output current is not available at the output of the inductive linking stage. The second terminal of the phase winding of the linking stage is connected to linking inductance node 224. The first terminal of the tuning inductor 210 is connected to the linking inductance node 224 and the linking stage phase winding. The second terminal of the tuning inductor 210 provides the fourth stage output current *Io4.*

FIG. 3 shows that the first terminal of the phase winding of the inductive linking stage is connected to the switching phase circuit 112 that is connected to node Vx(N) in FIG. 1. The inductive linking stage is switched in the same way as the inductive phase stages. For instance, the switching phase circuits 112 connected to the first terminals of the four phase windings may be switched using non-overlapping phase switching control signals (e.g., Φ₁, Φ₁', Φ₂, Φ₂', ... Φ₄, Φ₄',) and an output current (*Io1*, *... Io4*) is produced for each of the phase stages of the switching of the switching converter circuit 402.

The four phase stages are tightly coupled by the core rails and core legs. The inductive linking stage is identical to the inductive phase stages and all four stages have the same mutual inductance (*Lm*). The leakage inductance is a small parasitic value. The tuning inductor 210 sets the transient properties for all four phase stages.

In a previous approach to making a BCL, a special boosted winding was used. Both terminals of the boosted winding were connected to a DC reference node (such as a circuit ground node) through a tuning inductor Lc. Because both ends of the boosted winding were at the same DC potential, no current flowed through the boosted winding. The boosted winding was wound around a core leg having a greater width and larger gap than the phase windings. Mutual magnetic flux associated with the other phase windings flowed in the boosted winding. In the present approach, the linked inductive phase stage is switched as in the other stages and is constructed the same as the other stages. The linked inductive phase stage winding is connected to the output and delivers power to the load. A larger gap is no longer needed, and the linked inductive phase stage is the same as the other phase stages. This simplifies manufacturing of the BCLs.

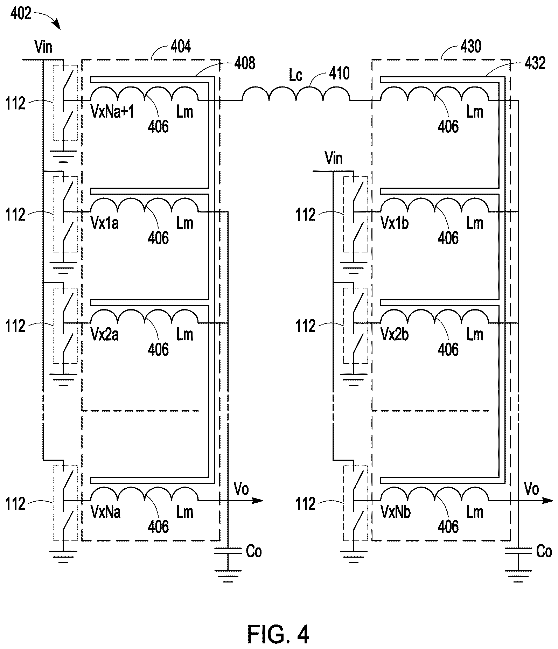

FIG. 4 is a circuit diagram of another example of a multi-phase switching converter circuit 402. The circuit includes two linked coupled inductors that are BCLs. BCL 404 includes *Na+1* phase windings 406 wound on a shared magnetic core 408, and BCL 430 includes *Nb+1* phase windings 406 wound on shared magnetic core 432, where *Na* and *Nb* are positive integers greater than one and *Na* may be equal to *Nb* in certain examples. One terminal (e.g., a first terminal) of the *Na+1* phase windings 406 of BCL 404 are each connected to a phase switching circuit 112. The other terminal (e.g., a second terminal) of *Na* phase windings of the BCL 404 are connected to the output node. One terminal of *Nb* phase windings 406 of BCL 430 are each connected to a phase switching circuit 112 and the other terminal of all the *Nb+1* phase windings of the BCL 430 are connected to the output node.

The switching converter circuit 402 also includes a tuning inductor 410 (Lc) that is separate from BCL 404 and BCL 430. The tuning inductor 410 is connected to a second terminal of one of the phase windings 406 of BCL 404 (e.g., the *Na+1* winding) and a first terminal of one of the phase windings 406 of BCL 430 (e.g., the *Nb+1* winding). The tuning inductor 410 can be located in any series connection of the phase windings without any change in functionality. The switching converter circuit 402 produces the regulated output *Vo* using *Na+Nb+1* phase stages and includes a controller circuit that generates *Na+Nb+1* interleaved phase switching control signals.

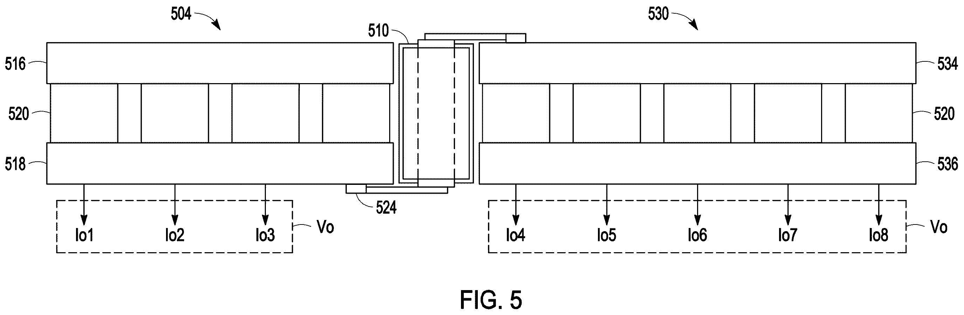

FIG. 5 is a sideview of an example of BCL 504, BCL 530, and tuning inductor 510 that can be used in an eight-phase (*Na=3, Nb=4*) switching converter circuit (e.g., the switching converter circuit 402 of FIG. 4). The magnetic core 408 of BCL 504 includes a first core rail 516, a second core rail 518, and four core legs 520. The magnetic core 432 of BCL 530 includes a third core rail 534, a fourth core rail 536, and five core legs 520. The core legs 520 of both BCLs are shown with a phase winding around the core legs 520. The first terminals of the phase windings are located near the first and third core rails and the second terminals of the phase windings are located near the second and fourth core rails.

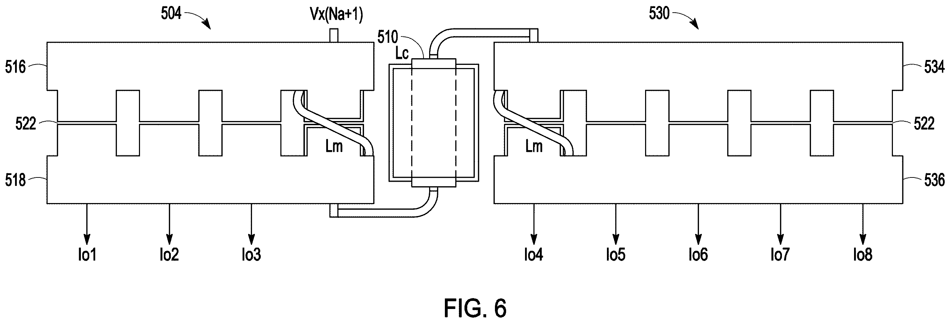

FIG. 6 is a cross section view of the example BCLs of FIG. 5. FIG. 6 shows that the nine core legs 520 have a gap 522 in the core legs. The nine core legs 520 are identical and have the same height, width, and gap size. BCL 504 has a different number of phase stages as BCL 530. In variations, the BCLs have the same number of phase stages.

BCL 504 includes four phase stages. The first three phase stages are inductive phase stages and the fourth phase stage is an inductive linking stage. The first terminals of the four phase windings of BCL 504 are each connected to a switching phase circuit 112. The second terminals of the phase windings of the three inductive phase stages are connected to the output node and the second terminal of the phase winding of the linking stage is connected to the tuning inductor 510.

BCL 530 includes five inductive phase stages. The first terminal of the phase winding of one of the inductive phase stages is connected to the second terminal of the tuning inductor 510. The first terminal of the phase windings of the other inductive phase stages of BCL 530 are each connected to a switching phase circuit 112. The second terminals of the five inductive phase stages are connected to the output node.

The three inductive phase stages of BCL 504 produce output currents *Io1, Io2, Io3* and the five inductive phase stages of BCL 504 produce output currents *Io4, Io5, Io6, Io7, Io8.* The output currents are provided to the output node. The linking stage of BCL 504 is identical to the inductive phase stages. The inductive phase stages and linking stage have the same mutual inductance (*Lm*)*.* The inductance from node Vx(Na+1) to the output *Io4* is higher due to the mutual inductance of the linking stage of BCL 504, the mutual inductance of the first inductive stage of BCL 530, and inductance *Lc* of the tuning inductor 510. The tuning inductor 510 sets the transient properties for the inductive phase stages of BCL 504 and BCL 530.

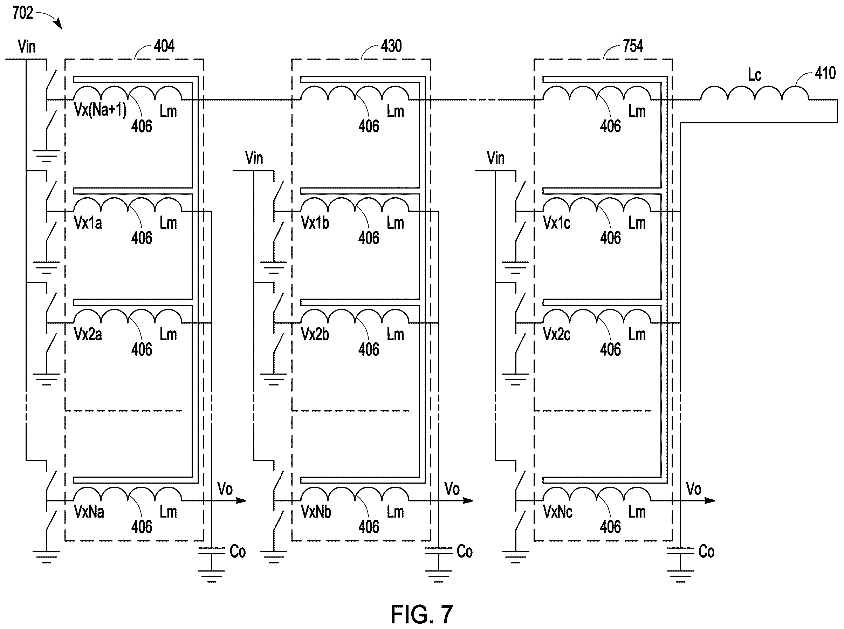

FIG. 7 is a circuit diagram of another example of a multi-phase switching converter circuit 702. The circuit includes three linked coupled inductors that are BCLs. The tuning inductor 410 is connected to phase winding of the third coupled inductor 754. The series connection of the tuning inductor can be anywhere in the series connections of the phase windings of the BCLs. The multi-phase switching converter 702 uses just one inductive linking phase for three BCLs. The approach in FIG. 7 can be extended to several BCLs and just one inductive linking stage. The phase stage with the inductive linking stage will be the most different of the phase stages due to the connection of several leakage inductances and several mutual inductances (Lm's).

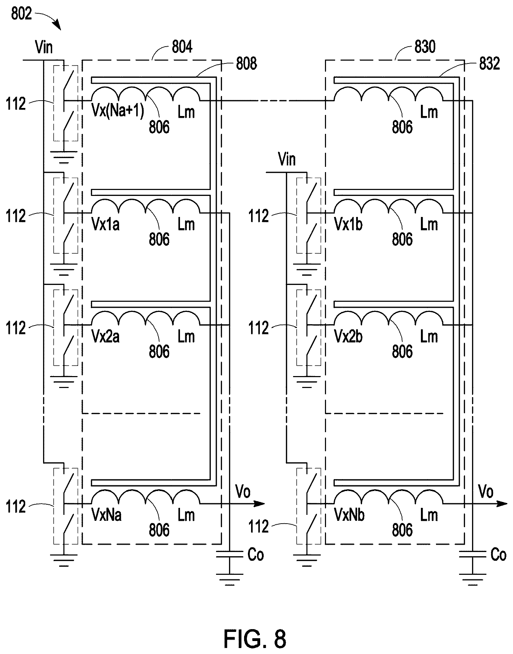

FIG. 8 is a circuit diagram of another example of a multi-phase switching converter circuit 802. The circuit includes two linked coupled inductors 804 and 830. Coupled inductor 804 includes *Na+1* phase windings 806 wound on a shared magnetic core 808, and coupled inductor 830 includes *Nb+1* phase windings 806 on shared magnetic core 832. In certain examples, the coupled inductors may have an equal number of phase windings. One terminal (e.g., a first terminal) of each of the *Na+1* phase windings 806 of coupled inductor 804 is connected to a phase switching circuit 112. The other terminals (e.g., the second terminals) of *Na* of the phase windings of coupled inductor 804 are connected to the output node.

The coupled inductor 830 is directly connected to coupled inductor 804, and there is not a tuning inductor connected between the coupled inductors. The switching converter circuit 802 of FIG. 8 can be viewed as the switching converter circuit 402 of FIG. 4 with the tuning inductor 410 removed. Because the tuning inductor 410 is removed, the switching converter circuit of FIG. 8 has a faster transient than the switching converter circuit 402 of FIG. 4. The second terminal of the *Na+1* phase windings of coupled inductor 804 is connected to the first terminal of the *Nb+1* phase winding of coupled inductor 830. The first terminals of the other *Nb* phase windings of coupled inductor 830 are connected to phase switching circuits 112. The second terminals of the *Nb+1* phase windings of coupled inductor 830 are all coupled to the output node. The switching converter circuit 802 produces a regulated output *Vo* using *Na+1+Nb+1* phases. The switching converter circuit 802 includes a controller circuit that produces *Na+Nb+1* interleaved phase switching control signals to generate *Na+Nb+1* output currents.

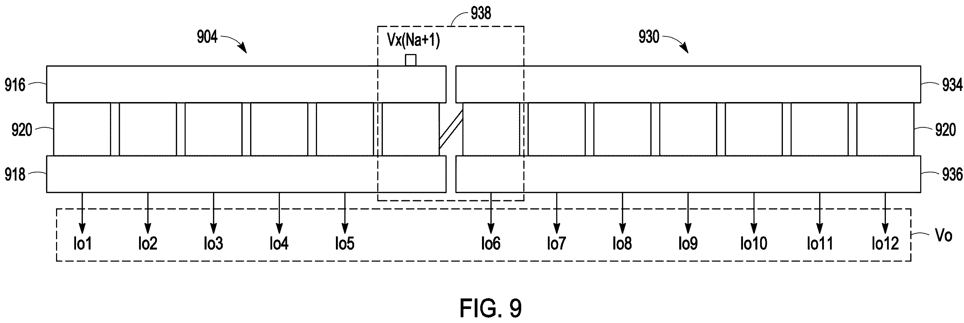

FIG. 9 is a sideview of an example of linked coupled inductors 904 and 930 that can be used in a thirteen-phase (*Na=5, Nb=6*) switching converter circuit (e.g., the switching converter circuit 802 of FIG. 8). The magnetic core 808 of coupled inductor 904 includes first core rail 916, a second core rail 918, and six core legs 920. The magnetic core 832 of coupled inductor 930 includes a third core rail 934, a fourth core rail 936, and seven core legs 920. The core legs 920 in FIG. 9 are shown with a phase winding around the core legs 920. The core legs 920 can include a core gap as in the core legs 220 of FIG. 3 and the core legs 520 of FIG. 6. The core legs 920 of coupled inductor 904 are identical, and the core legs 920 of coupled inductor 930 are identical to the core legs of coupled inductor 904. The phase windings around the core legs 920 are identical, making thirteen identical phase stages for the combined linked coupled inductor circuit.

The first five phase stages of coupled inductor 904 produces output currents *Io1, Io2, Io3, Io4, Io5* that are applied to the output node and the last six phase stages of coupled inductor 930 produces output currents *Io7, Io8, Io9, Io10, Io11, Io12* that are applied to the output node. The last phase stage (*Na+1* phase stage) is an inductive linking stage. The phase winding of the last phase stage of coupled inductor 904 is connected to the phase winding of the leftmost phase stage of coupled inductor 930, and the linked stage 938 produces output current *Io6.* The connected phase stages have twice the mutual inductance *Lm* of the other phase stages.

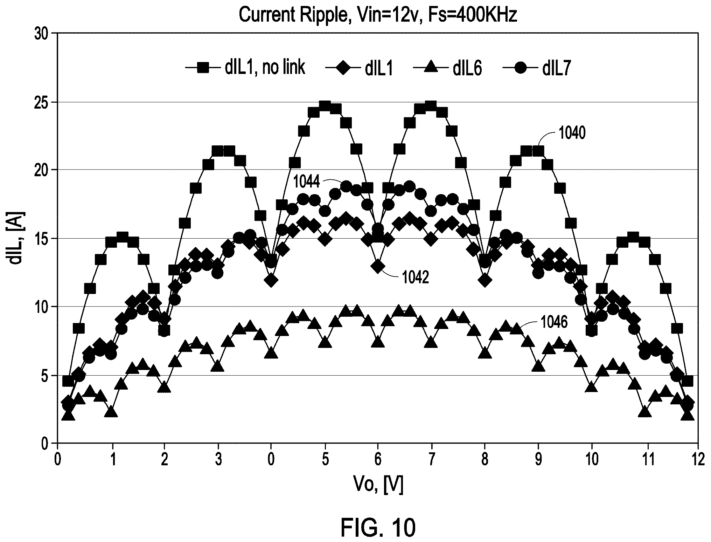

FIG. 10 is a graph of inductor current ripple curves for twelve phases of non-linked coupled inductors and linked and coupled inductors. Ripple curve 1040 is for the first phase stage of two six phase stage coupled inductors that produce 12 phases (a 6+6 configuration). The ripple curve 1040 has 5 notches in the curve because only six phases are coupled in each coupled inductor.

Ripple curve 1042 is for the first phase stage (*Io1*) of a six phase stage coupled inductor linked to a seven phase stage coupled inductor to produce 12 phases (a linked 6+7 configuration). The ripple curve 1042 phase has 12 notches and the ripple curve 1042 shows that linked coupled inductors reduces the ripple current. Ripple curve 1044 is for the seventh phase stage (*Io7*) of the linked configuration and ripple curve 1046 is for the sixth phase stage (*Io6*) of the linked configuration. The sixth phase stage has the lowest ripple because it includes the linking phase stage and it has twice the mutual inductance of the other stages. The curves in FIG. 10 show that significant ripple reduction can be achieved by directly linking coupled inductors; especially for the linked stage 938 of FIG. 9. Directly linked coupled inductors also have a very fast transient response.

Interestingly, despite the sixth phase stage with the linking phase stage having twice the leakage inductance does not slow the transient response. The current in the linking phase ramps up (or down) at the same slew rate as all other phases. The reason for this is that although the sixth phase stage has two leakages in series, the sixth phase stage also has two windings that apply the voltage to the total leakage. Thus, there is no penalty in transient current slew rate by using the linking phase.

Ideally, a single 12 phase stage coupled inductor would be used to produce 12 phases of current. But a large single piece or monolithic coupled inductor, such as a monolithic 12 phase coupled inductor is very difficult to manufacture. Linking smaller coupled inductors together is a solution to the challenge of manufacturing larger coupled inductors with many phases.

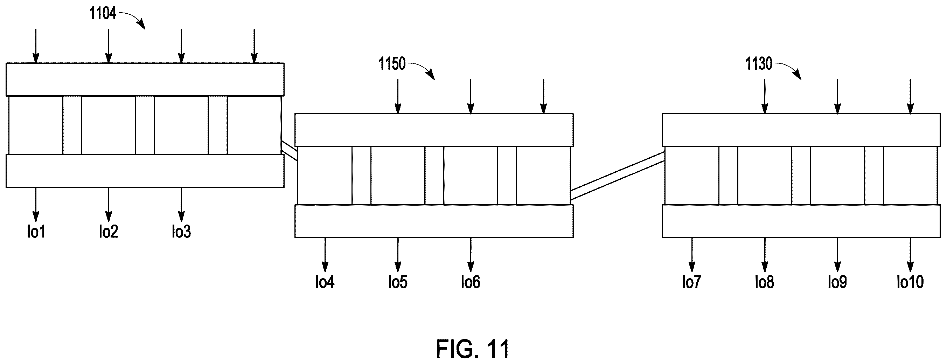

FIG. 11 is an example of multiple smaller coupled inductors combined into a linked coupled inductor. The example in FIG. 11 is a ten-phase linked coupled inductor in a 4+4+4 configuration including a first, middle, and last coupled inductor linked in series. The first coupled inductor 1104 is like coupled inductor 804 in FIG. 8 with *Na=3.* The last coupled inductor 1130 is like coupled inductor 830 in FIG. 8 with *Nb=3.* The twelve phase stages of all coupled inductors are identical. The input voltage is switched to the phase windings of all *Na+1* phase stages of the first coupled inductor 1104 and the last *Nb* phase stages of the last coupled inductor 1130. For the middle coupled inductor 1150, the input voltage is switched to the phase windings of all but the first phase stages as in the last coupled inductor 1130.

The first coupled inductor 1104 and the middle coupled inductor 1150 include a linking stage as the last phase stage. The phase winding of each linking stage is coupled to the phase winding of the first stage of the next coupled inductor connected in the series. The three linked coupled inductors produce ten output currents at the output node. The linking stages do not apply an output current to the output node. More than three coupled inductors can be linked so there are multiple middle coupled inductors 1150 linked in series between the first coupled inductor 1104 and the last coupled inductor 1130. FIG. 11 also shows that linked coupled inductors do not have to be aligned in a row or side-by-side.

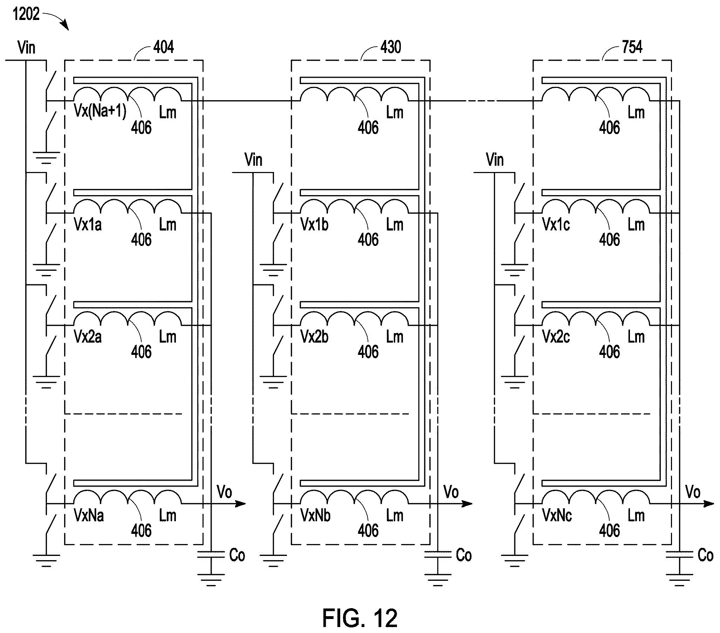

FIG. 12 is a circuit diagram of another example of a multi-phase switching converter circuit 1202. The circuit includes three linked coupled inductors that are BCLs. The switching converter 1202 of FIG. 12 is the switching converter of FIG. 7 with the tuning inductor 410 removed. Because the tuning inductor 410 is removed, the switching converter circuit 1202 of FIG. 12 has a faster transient than the switching converter circuit 702 of FIG. 7. As in the example of FIG. 7, the switching converter circuit 1202 of FIG. 12 has one inductive linking stage linking the BCLs. The phase stage with the inductive linking stage will be the most different of the phase stages due to the connection of several leakage inductances and several mutual inductances (Lm's). For example, the inductive plinking phase stage will have three times the leakage inductance of other stages. The approach can be extended to more than three linked coupled inductors.

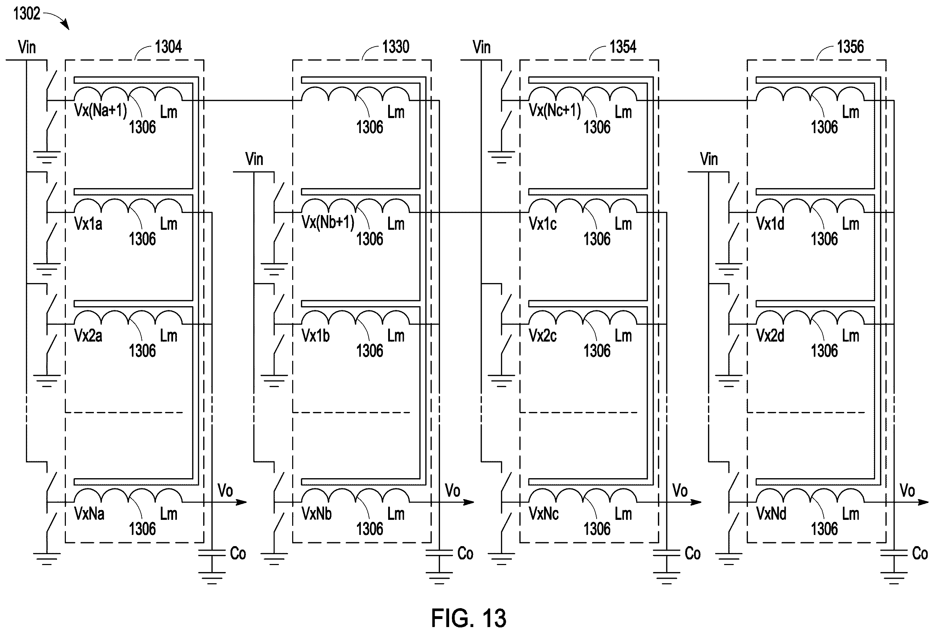

FIG. 13 is a circuit diagram of another example of a multi-phase switching converter circuit 1302. The circuit includes four linked coupled inductors that are BCLs. The phase windings 1306 and core legs of the BCLs are identical. The BCLs are linked in pairs of phase stages instead of a single linking phase stage as in the approach of FIG. 12. For instance, phase stage Vx(Na+1) of BCL 1304 is connected to the top phase stage of BCL 1330 to form a first linking phase stage, and phase stage Vx(Nc+1) of BCL 1354 is connected to the top phase stage of BCL 1356 to form a second phase stage. The approach can be extended to more than four BCLs. Each linking phase stage will be different from the other phase stages but only by two times (2x) the leakage inductance.

The approach in FIG. 13 is more symmetric than the single linking stage approach of FIG. 12. If only one linking phase stage were used, the single linking phase stage would be different by four times (4x) the leakage inductance. The approach in FIG. 13 prevents a slowest linking phase being four times slower than the other phases, and the slowest linking phases will only be two time slower than the other phases. The approach in FIG. 13 may also be preferable for circuit layout because shorter polygons may be needed to connect neighboring phases of BCLs place side-by-side rather than to link the single linking phase to all the BCLs.

The several examples of systems, devices, and methods described provide coupled inductors that where the same winding geometry is used in each phase. This simplifies manufacture of the core and windings. Coupled inductors of large size with a large number of phases is difficult and expensive to manufacture. Coupled inductors with a large number of phases can be implemented by linking smaller coupled inductors that are easier and cheaper to manufacture.

### ADDITIONAL DESCRIPTION AND ASPECTS

A first Aspect (Aspect 1) includes subject matter (such as an inductive circuit) comprising a first coupled inductor. The coupled inductor includes a magnetic core including a first core rail, a second core rail, and multiple identical core legs between the first core rail and the second core rail, wherein the core legs include an identical gap; multiple identical inductive phase stages, wherein each inductive phase stage includes a core leg and an identical phase winding around the core leg, wherein each phase winding includes a first terminal connected to an input node and a second terminal connected to an output node; and an inductive linking stage identical to the multiple inductive phase stages, wherein a first terminal of a phase winding of the inductive linking stage is connected to the input node and a second terminal of the phase winding of the linking stage is connected to a linking inductance node.

In Aspect 2, the subject matter of Aspect 1 optionally includes a second coupled inductor including multiple identical inductive phase stages including a first inductive phase stage. A second terminal of each phase winding of the multiple identical inductive phase stages is connected to the output node, and a first terminal of a phase winding of the first inductive phase stage is connected to the linking inductance node, and first terminals of a phase winding of other inductive phase stages are connected to the input node.

In Aspect 3, the subject matter of Aspect 2 optionally includes the second coupled inductor having a different number of inductive phase stages than the first coupled inductor.

In Aspect 4, the subject matter of one or any combination of Aspects 1-3 optionally includes a tuning inductor external to the first coupled inductor, wherein the tuning inductor includes a first terminal connected to the linking inductance node and a second terminal connected to the output node.

In Aspect 5, the subject matter of Aspect 1 optionally includes a tuning inductor external to the first coupled inductor and a second coupled inductor. The tuning inductor includes a first terminal and a second terminal, and the first terminal is connected to the linking inductance node. The second coupled inductor includes multiple identical inductive phase stages including a first inductive phase stage. A second terminal of each phase winding of the multiple identical inductive phase stages is connected to the output node, and a first terminal of a phase winding of the first inductive phase stage is connected to the second terminal of the tuning inductor. The first terminals of a phase winding of other inductive phase stages are connected to the input node.

In Aspect 6, the subject matter of Aspect 1 optionally includes a last coupled inductor and one or more middle coupled inductors coupled between the first coupled inductor and the last coupled inductor. The last coupled inductor and the one or more middle coupled inductors include identical inductive phase stages including a first inductive phase stage, and the one or more middle coupled inductors include an inductive linking stage identical to the inductive phase stages. A first terminal of a phase winding of the first inductive phase stages is connected to a second terminal of a phase winding of an inductive linking stage of another coupled inductor and first terminals of other inductive phase stages are connected to the input node.

In Aspect 7, the subject matter of Aspect 6 optionally includes second terminals of the inductive phase stages of the last coupled inductor and the one or more middle coupled inductors are connected to the output node.

In Aspect 8, the subject matter of one or both of Aspects 6 and 7 optionally includes the last coupled inductor including a different number of inductive phase stages connected to the output node than the first coupled inductor and the one or more middle coupled inductors.

Aspect 9 includes subject matter (such as a multi-phase switching converter circuit) or can optionally be combined with one or any combination of Aspects 1-8 to include such subject matter, comprising a first coupled inductor, multiple switching phase circuits, and a controller circuit. The first coupled inductor includes a magnetic core including a first core rail, a second core rail, and multiple identical core legs between the first core rail and the second core rail, wherein the core legs include an identical gap; multiple identical inductive phase stages, wherein each inductive phase stage includes a core leg and an identical phase winding around the core leg, wherein each phase winding includes a first terminal and a second terminal, and the second terminals are connected to an output node; and an inductive linking stage identical to the multiple inductive phase stages and including a first terminal and a second terminal, wherein the second terminal is connected to a linking inductance node. Each switching phase circuit connected to an input node and connected to a respective first terminal of a phase winding of the inductive phase stages and the inductive linking stage of the first coupled inductor. The controller circuit is configured to apply phase switching control signals to the switching phase circuits to produce a regulated output at the output node.

In Aspect 10, the subject matter of Aspect 10 optionally includes a second coupled inductor including multiple identical inductive phase stages including a first inductive phase stage; wherein a second terminal of each phase winding of the multiple identical inductive phase stages is connected to the output node; and wherein a first terminal of a phase winding of the first inductive phase stage is connected to the linking inductance node; and multiple second switching phase circuits, each coupled to the input node and a respective first terminal of a phase winding of other inductive phase stages of the second coupled inductor. The controller circuit is optionally configured to apply the phase switching control signals to the switching phase circuits and the second switching phase circuits to produce the regulated output at the output node.

In Aspect 11, the subject matter of Aspect 10 optionally includes phased switching control signals that produce phase outputs on the first and second coupled inductors to generate the regulated output, and the first coupled inductor includes a different number of the phase outputs than the second coupled inductor.

In Aspect 12, the subject matter of one or both of Aspects 10 and 11 optionally includes a controller circuit configured to interleaved phase activation signals to the switching phase circuits and the second switching phase circuits to produce the regulated output at the output node.

In Aspect 13, the subject matter of one or any combination of Aspects 9-12 optionally includes a tuning inductor external to the first coupled inductor. The tuning inductor includes a first terminal coupled to the linking inductance node and a second terminal coupled to the output node.

In Aspect 14, the subject matter of Aspect 13 optionally includes the converter circuit producing phase of output current at the output of the tuning inductor when activating a switching phase circuit of the linking stage.

In Aspect 15, the subject matter of Aspect 9 optionally includes a tuning inductor external to the first coupled inductor; wherein the tuning inductor includes a first terminal and a second terminal, wherein the first terminal is coupled to the inductive linking stage of the first coupled inductor; a second coupled inductor including multiple identical inductive phase stages including a first inductive phase stage, wherein a second terminal of each phase winding of the multiple identical inductive phase stages is connected to the output node, and wherein a first terminal of a phase winding of the first inductive phase stage is connected to the second terminal of the tuning inductor; multiple second switching phase circuits, each coupled to the input node and a first terminal of respective phase winding of other inductive phase stages of the second coupled inductor; and the controller circuit is optionally configured to apply the phased switching control signals to the switching phase circuits and the second switching phase circuits to produce the regulated output at the output node.

In Aspect 16, the subject matter of Aspect 15 optionally includes the second coupled inductor includes a different number of inductive phase stages connected to the output node than the first coupled inductor.

Aspect 17 includes subject matter (such as a coupled inductor circuit) or can optionally be combined with one or any combination of Aspects 1-16 to include such subject matter comprising a first coupled inductor and a second coupled inductor. The first coupled inductor includes a first magnetic core including a first core rail, a second core rail, and multiple identical core legs between the first core rail and the second core rail, wherein the core legs include an identical gap; and multiple identical inductive phase stages, wherein an inductive phase stage includes an identical phase winding around a core leg of the first magnetic core. The second coupled inductor includes a second magnetic core including a third core rail, a fourth core rail, and multiple identical core legs between the third core rail and the fourth core rail, wherein the core legs of the second magnetic core are identical to the core legs of the first magnetic core and include the identical gap; and multiple identical inductive phase stages that each include a phase winding around a core leg of the second magnetic core. The first coupled inductor further includes an inductive linking stage identical to the inductive phase stage. A second terminal of the phase winding of the inductive linking stage of the first coupled inductor is connected to a first terminal of the phase winding of a first inductive phase stage of the second coupled inductor, and other second terminals of other phase windings are connected to an output node.

In Aspect 18, the subject matter of Aspect 17 optionally includes multiple switching phase circuits including a respective switching phase circuit coupled to each of the first terminals of phase windings of the first coupled inductor, and a respective switching phase circuit coupled to each of the first terminals of phase windings of the second coupled inductor other than the first terminal of the phase winding of the first inductive phase stage of the second coupled inductor.

In Aspect 19, the subject matter of Aspect 18 optionally includes a controller circuit configured to produce control signals to activate each switching phase circuit on a separate phase.

In Aspect 20, the subject matter of one or any combination of Aspects 17-19 optionally includes the second coupled inductor including a different number of core legs than the first coupled inductor.

These non-limiting Aspects can be combined in any permutation or combination. The above detailed description includes references to the accompanying drawings, which form a part of the detailed description. The drawings show, by way of illustration, specific embodiments in which the invention can be practiced. These embodiments are also referred to herein as "examples." All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

The present specification also describes a coupled inductor circuit, comprising:
a first coupled inductor including:
a first magnetic core including a first core rail, a second core rail, and multiple identical core legs between the first core rail and the second core rail, wherein the core legs include an identical gap; and
multiple identical inductive phase stages, wherein an inductive phase stage includes an identical phase winding around a core leg of the first magnetic core; a second coupled inductor including:
a second magnetic core including a third core rail, a fourth core rail, and multiple identical core legs between the third core rail and the fourth core rail, wherein the core legs of the second magnetic core are identical to the core legs of the first magnetic core and include the identical gap; and
multiple identical inductive phase stages that each include a phase winding around a core leg of the second magnetic core;
wherein the first coupled inductor includes an inductive linking stage identical to the inductive phase stages; and
wherein a second terminal of the phase winding of the inductive linking stage of the first coupled inductor is connected to a first terminal of the phase winding of a first inductive phase stage of the second coupled inductor, and other second terminals of other phase windings are connected to an output node.

The above-described coupled inductor circuit may also include:
multiple switching phase circuits including a respective switching phase circuit coupled to each of the first terminals of phase windings of the first coupled inductor, and a respective switching phase circuit coupled to each of the first terminals of phase windings of the second coupled inductor other than the first terminal of the phase winding of the first inductive phase stage of the second coupled inductor.

The above-described coupled inductor circuit may also include:
a controller circuit configured to produce control signals to activate each switching phase circuit on a separate phase.

The above-described coupled inductor circuit may also include:
wherein the second coupled inductor includes a different number of core legs than the first coupled inductor.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects. Method examples described herein can be machine or computer-implemented at least in part.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims, along with the full scope of equivalents to which such claims are entitled.

## Claims

1. An inductive circuit, comprising:
a first coupled inductor including:
a magnetic core including a first core rail, a second core rail, and multiple identical core legs between the first core rail and the second core rail, wherein the core legs include an identical gap;
multiple identical inductive phase stages, wherein each inductive phase stage includes a core leg and an identical phase winding around the core leg, wherein each phase winding includes a first terminal connected to an input node and a second terminal connected to an output node; and
an inductive linking stage identical to the multiple inductive phase stages,
wherein a first terminal of a phase winding of the inductive linking stage is connected to the input node and a second terminal of the phase winding of the linking stage is connected to a linking inductance node.

2. The inductive circuit of claim 1, including:
a second coupled inductor including multiple identical inductive phase stages including a first inductive phase stage;
wherein a second terminal of each phase winding of the multiple identical inductive phase stages is connected to the output node; and
wherein a first terminal of a phase winding of the first inductive phase stage is connected to the linking inductance node, and first terminals of a phase winding of other inductive phase stages are connected to the input node.

3. The inductive circuit of claim 2, wherein the second coupled inductor has a different number of inductive phase stages than the first coupled inductor.

4. The inductive circuit of any of claims 1 to 3, including:
a tuning inductor external to the first coupled inductor, wherein the tuning inductor includes a first terminal connected to the linking inductance node and a second terminal connected to the output node.

5. The inductive circuit of any of claims 1 to 3, including:
a tuning inductor external to the first coupled inductor; wherein the tuning inductor includes a first terminal and a second terminal, wherein the first terminal is connected to the linking inductance node; and
a second coupled inductor including multiple identical inductive phase stages including a first inductive phase stage, wherein a second terminal of each phase winding of the multiple identical inductive phase stages is connected to the output node, and wherein a first terminal of a phase winding of the first inductive phase stage is connected to the second terminal of the tuning inductor, and first terminals of a phase winding of other inductive phase stages are connected to the input node.

6. The inductive circuit of any of claims 1 to 5, including:
a last coupled inductor and one or more middle coupled inductors coupled between the first coupled inductor and the last coupled inductor;
wherein the last coupled inductor and the one or more middle coupled inductors include identical inductive phase stages including a first inductive phase stage, and the one or more middle coupled inductors include an inductive linking stage identical to the inductive phase stages; and
wherein a first terminal of a phase winding of the first inductive phase stages is connected to a second terminal of a phase winding of an inductive linking stage of another coupled inductor and first terminals of other inductive phase stages are connected to the input node.

7. The inductive circuit of claim 6, wherein second terminals of the inductive phase stages of the last coupled inductor and the one or more middle coupled inductors are connected to the output node.

8. The inductive circuit of any of claims 6 or 7, wherein the last coupled inductor includes a different number of inductive phase stages connected to the output node than the first coupled inductor and the one or more middle coupled inductors.

9. A multi-phase switching converter circuit, the converter circuit comprising:
a first coupled inductor including:
a magnetic core including a first core rail, a second core rail, and multiple identical core legs between the first core rail and the second core rail, wherein the core legs include an identical gap;
multiple identical inductive phase stages, wherein each inductive phase stage includes a core leg and an identical phase winding around the core leg, wherein each phase winding includes a first terminal and a second terminal, and the second terminals are connected to an output node; and
an inductive linking stage identical to the multiple inductive phase stages and including a first terminal and a second terminal, wherein the second terminal is connected to a linking inductance node;
multiple switching phase circuits, each switching phase circuit connected to an input node and connected to a respective first terminal of a phase winding of the inductive phase stages and the inductive linking stage of the first coupled inductor; and
a controller circuit configured to apply phase switching control signals to the switching phase circuits to produce a regulated output at the output node.

10. The converter circuit of claim 9, including:
a second coupled inductor including:
multiple identical inductive phase stages including a first inductive phase stage; wherein a second terminal of each phase winding of the multiple identical inductive phase stages is connected to the output node; and wherein a first terminal of a phase winding of the first inductive phase stage is connected to the linking inductance node; and
multiple second switching phase circuits, each coupled to the input node and a respective first terminal of a phase winding of other inductive phase stages of the second coupled inductor; and
wherein the controller circuit is configured to apply the phase switching control signals to the switching phase circuits and the second switching phase circuits to produce the regulated output at the output node.

11. The converter circuit of claim 10, wherein the phased switching control signals produces phase outputs on the first and second coupled inductors to generate the regulated output, and the first coupled inductor includes a different number of the phase outputs than the second coupled inductor.

12. The converter circuit of claim 10 or 11, wherein the controller circuit is configured to apply a separate interleaved phase activation signal to each of the switching phase circuits and the second switching phase circuits to produce the regulated output at the output node.

13. The converter circuit of any of claims 9 to 12, including:
a tuning inductor external to the first coupled inductor, wherein the tuning inductor includes a first terminal coupled to the linking inductance node and a second terminal coupled to the output node.

14. The converter circuit of claim 13, wherein a phase of output current is produced at the output of the tuning inductor when activating a switching phase circuit of the linking stage.

15. The converter circuit of any of claims 9 to 14, including:
a tuning inductor external to the first coupled inductor; wherein the tuning inductor includes a first terminal and a second terminal, wherein the first terminal is coupled to the inductive linking stage of the first coupled inductor;
a second coupled inductor including multiple identical inductive phase stages including a first inductive phase stage, wherein a second terminal of each phase winding of the multiple identical inductive phase stages is connected to the output node, and wherein a first terminal of a phase winding of the first inductive phase stage is connected to the second terminal of the tuning inductor; and
multiple second switching phase circuits, each coupled to the input node and a first terminal of respective phase winding of other inductive phase stages of the second coupled inductor; and
wherein the controller circuit is configured to apply the phased switching control signals to the switching phase circuits and the second switching phase circuits to produce the regulated output at the output node;
wherein the second coupled inductor optionally further includes a different number of inductive phase stages connected to the output node than the first coupled inductor.
